# EUROPÄISCHE PATENTSCHRIFT

(11) **EP 3 806 314 B1**
(45) Veröffentlichungstag und Bekanntmachung des Hinweises auf die Patenterteilung: **26.06.2024**
(21) Anmeldenummer: 20200443.8
(22) Anmeldetag: 07.10.2020
(51) Int. Cl.: H02M 7/48, H02M 7/493, H02M 1/088, H02M 7/487, H02M 1/00

(54) **UMRICHTER FÜR EIN WECHSELSTROMNETZ**
INVERTER FOR AN ALTERNATING CURRENT GRID
ONDULEUR POUR UN RÉSEAU DE COURANT ALTERNATIF

(30) Priorität: 08.10.2019 AT 508572019
(43) Veröffentlichungstag der Anmeldung: 14.04.2021
(73) Patentinhaber: AIT Austrian Institute of Technology GmbH, 1210 Wien (AT)
(72) Erfinder: MAKOSCHITZ, Markus, 2305 Kopfstetten (AT)
(74) Vertreter: Wildhack & Jellinek Patentanwälte

(56) Entgegenhaltungen:
- EP-A1- 2 117 121
- EP-A1- 3 188 355
- EP-A1- 3 518 400
- JP-A- 2002 078 104
- US-A1- 2015 131 348
- US-A1- 2018 102 649

## Beschreibung

Die Erfindung betrifft einen Umrichter für ein mehrphasiges Netz gemäß dem Oberbegriff des Patentanspruchs 1.

Aus dem Stand der Technik ist eine Vielzahl unterschiedlicher Umrichter bekannt, mit denen es möglich ist, Wechselspannungen in Gleichspannungen umzurichten. Dabei werden derartige Umrichter typischerweise durch Halbbrücken- oder Multilevelschaltungen mit unterschiedlichen Transistoren realisiert, die entsprechend einem vorgegebenen Soll-Spannungsverlauf der Wechselspannung geschaltet werden. Derartige Umrichter arbeiten innerhalb eines vorgegebenen Lastbereichs, jedoch innerhalb eines vorgegebenen Maximallastbereichs, wobei die Effizienz derartiger Umrichter typischerweise im Niederlastbereich deutlich reduziert ist. Beispielsweise hat ein Umrichter mit IGBT-Transistoren typischerweise seine maximale Effizienz in einem Bereich zwischen 40 und 60 % der Maximalleistung, wobei die Effizienz in einem Bereich von 1 bis 7% der Maximalleistung deutlich schlechter ist als im übrigen Arbeitsbereich. Dies hat zur Folge, dass beim Betrieb des Umrichters mit geringer Übertragungsenergie das Verhältnis zwischen Verlustleistung und übertragener Leistung immer größer wird.

Für den optimalen Betrieb im gesamten Lastbereich schlagen US2018102649, EP3518400 und JP2002078104 den Einsatz von optimierten Schalterpaaren vor. Darüberhinaus beschreibt EP3188355 einen T-Type Multilevel-Umrichter.

Die Erfindung setzt sich die Aufgabe, die genannten Nachteile zu überwinden und einen Umrichter zu schaffen, der auch in Bereichen von unter 10% der Maximallast zuverlässig und mit deutlich geringeren Übertragungsverlusten funktioniert.

Die Erfindung löst diese Aufgabe bei einem Umrichter der eingangs genannten Art mit den Merkmalen des Patentanspruchs 1.

Eine besonders vorteilhafte Weiterbildung der Erfindung, die einen allphasigen Betrieb bei einem Mehrphasennetzwerk auch bei geringer Leistung erlaubt, sieht vor, dass für jeden der Transistoren in allen Halbbrücken oder Multilevel-Schaltungen oder für jeden der Transistoren in ausgewählten Halbbrücken oder Multilevel-Schaltungen jeweils ein weiterer Transistor vorgesehen ist, der jeweils parallel zu diesem Transistor geschaltet ist, wobei der weitere Transistor für eine nominelle Strombelastung ausgelegt ist, die unterhalb der nominellen Strombelastung des jeweiligen Transistors, insbesondere unterhalb von 20% der nominellen Strombelastung des Transistors, liegt.

Mehrere Ausführungsformen der Erfindung werden im Folgenden ohne Beschränkung des allgemeinen erfinderischen Gedankens näher dargestellt.

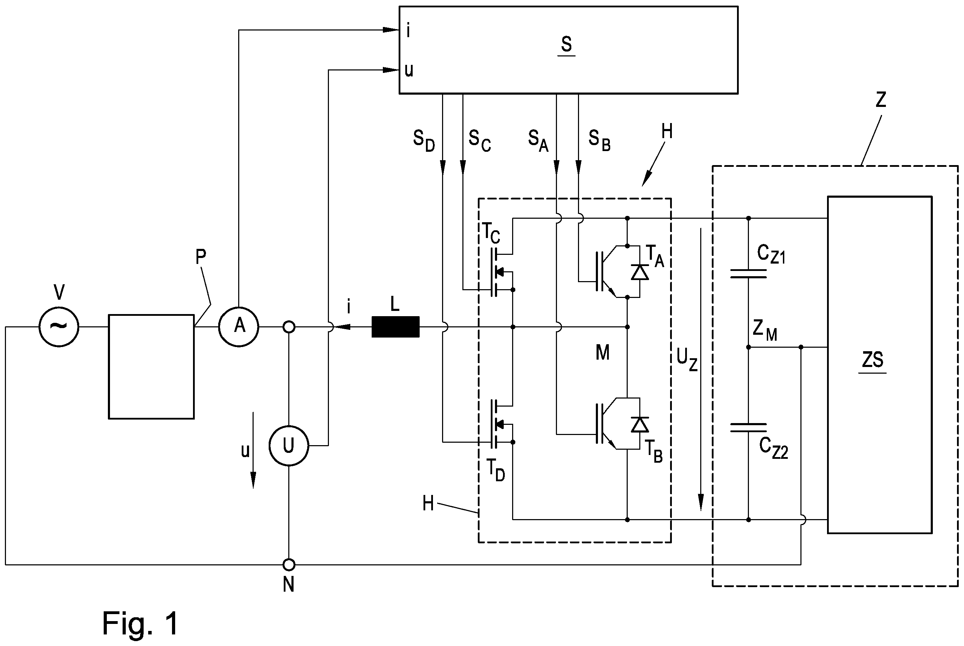

**Fig.** 1 zeigt beispielhaft eine Ausführungsform eines einphasigen Umrichters mit einem Phasenanschluss P und einem Nullleiter N. Der Umrichter verfügt über eine Halbbrücke H, deren Mittenanschluss M über eine Spule L an den Phasenanschluss P angeschlossen ist. Darüber hinaus verfügt dieser Umrichter über einen Zwischenspannungskreis Z umfassend zwei in Serie geschaltete und an den Gleichspannungsanschlüssen angeschlossene Zwischenkreiskondensatoren C_{Z1}, C_{Z2}, die mit ihrem jeweils anderen Anschluss an einen Mittenanschluss Z_{M} der Zwischenkreisstabilisierungsschaltung ZS angeschlossen sind. Die Halbbrücke H umfasst zwei Transistoren T_{A}, T_{B}, die in Serie geschaltet und mit ihren Außenanschlüssen an die Zwischenkreisspannung U_{Z} angeschlossen sind. Der Mittelpunkt M der beiden Transistoren T_{A}, T_{B} ist über die Spule L mit dem Phasenanschluss P verbunden. Darüber hinaus weist die Halbbrücke H zwei weitere Transistoren T_{C}, T_{D} auf, die in Serie geschaltet sind, wobei die beiden Enden der Serienschaltung an die Zwischenkreisspannung U_{Z} angeschlossen sind. Der Mittelpunkt M der Halbbrücke umfassend die beiden Transistoren T_{C}, T_{D} ist über die Spule L mit dem Phasenanschluss P verbunden. Darüber hinaus verfügt der Umrichter über eine Steuereinheit S, die die Transistoren T_{A}, T_{B} sowie die weiteren Transistoren T_{C}, T_{D} ansteuert.

In dem dargestellten Umrichter sind auch ein Strommessgerät A zur Messung des durch die Spule L fließenden Stroms i sowie ein Spannungsmessgerät U zur Messung der Spannung u zwischen dem Phasenanschluss P und dem Nullleiter N vorgesehen. Die von diesen beiden Messgeräten A, U ermittelten Strom- bzw. Spannungsmesswerte i, u werden ebenfalls der Steuereinheit S zugeführt. Kennt die Steuereinheit S den Verlauf der Spannungs- bzw Strommesswerte u, i, kann sie die über den Umrichter zu übertragende Leistung ermitteln.

Sofern über den Umrichter eine Leistung übertragen werden soll, die zum Beispiel über einem Schwellenwert von 10% der Maximalleistung des Umrichters liegt, werden in dieser bevorzugten Ausführungsform der Erfindung zur Umschaltung der Zwischenkreisspannung auf die Phase P die beiden Transistoren T_{A}, T_{B} verwendet. Die Wahl des Grenzbereichs hängt grundsätzlich vom Effizienzverlauf des jeweiligen Transistors sowie von der gewählten Applikation ab, sodass der Schwellenwert so gesetzt werden kann, dass der Umrichter für einen möglichst großen Zeitbereich in einem möglichst verlustarmen Bereich betrieben wird.

Bei diesen Transistoren T_{A}, T_{B} kann es sich beispielsweise um Silizium-IGBTs handeln, die dazu in der Lage sind, große Ströme aufzunehmen. Im vorliegenden Ausführungsbeispiel handelt es sich bei den beiden Transistoren T_{C}, T_{D} um, je nach Eingangsspannungs- und Zwischenkreisspannungskennwerte, Siliziumkarbid-MOSFETs oder Galliumnitrid-Transistoren. Zum Einstellen der Spannung am Mittelpunkt zwischen den beiden Transistoren T_{A}, T_{B} werden diese abwechselnd durchlässig geschaltet, sodass sich ein pulsweitenmoduliertes Signal mit einem Spannungshub U_{Z} am Mittelpunkt M einstellt. Die beiden weiteren Transistoren T_{C}, T_{D} bleiben in diesem Betriebszustand ständig gesperrt. Durch die Spule steht trotz des pulsweitenmodulierten Spannungssignal im Mittenpunkt M ein Spannungssignal am Phasenanschluss P zur Verfügung, dessen Frequenz der Netzfrequenz entspricht und das nur geringfügige Anteile mit höheren Frequenzen aufweist.

Stellt die Steuerschaltung S fest, dass die über den Umrichter übertragene Leistung unter eine vorgegebene Schwellenwertleistung, die im vorliegenden Fall bei 10% der zu übertragenden Maximalleistung des Umrichters liegt, gesunken ist, steuert die Steuerschaltung S anstelle der beiden IGBT- Transistoren T_{A}, T_{B} die beiden SiC MOSFETs als weitere Transistoren T_{C}, T_{D} an, sodass zur Erstellung der Spannung im Mittelpunkt M die weiteren Transistoren T_{C}, T_{D} verwendet werden. Die beiden Transistoren T_{A}, T_{B} bleiben in diesem Fall gesperrt.

Zur Ansteuerung der einzelnen Transistoren wird typischerweise ein digitaler Signalprozessor verwendet, der ein pulsweiten moduliertes Signal mit einer Pulsdauer im KHz-Bereich vorgibt, das über einen für den jeweils vorgesehenen Transistor bzw. weiteren Transistor passendenden Gatetreiber angeschlossen ist. Der Ausgang der Gatetreiber weist jeweils zwei Anschlüsse auf, die jeweils an den Schalteingang (Gate, Basis) sowie an einen weiteren Eingang (Emitter, Source) des jeweiligen Transistors angeschlossen sind.

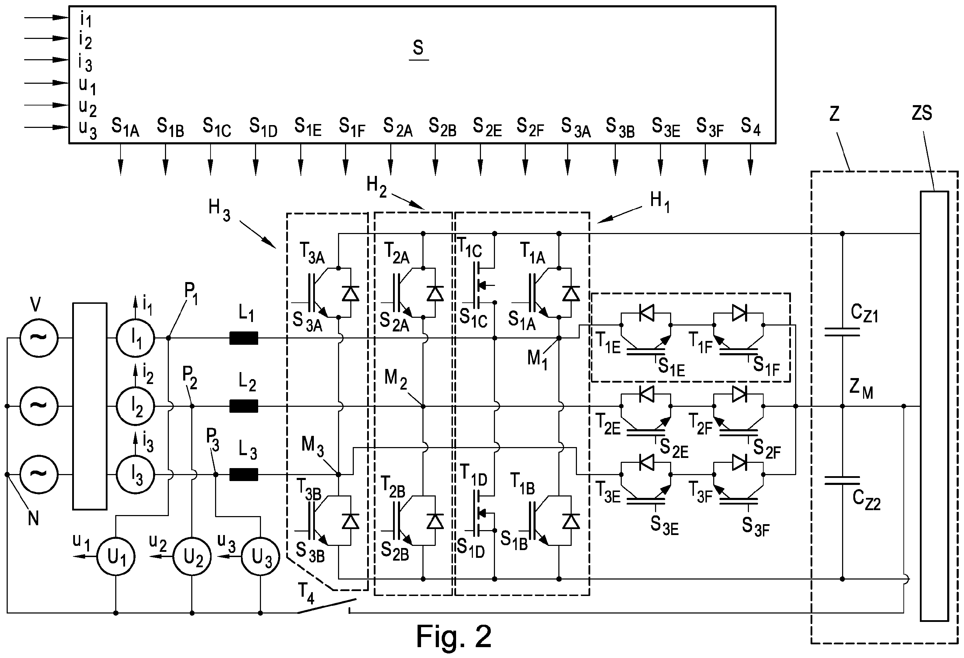

In **Fig. 2** ist eine erste Ausführungsform der Erfindung näher dargestellt, die ein dreiphasiges Netzwerk mit drei Dreilevelschaltungen H₁, H₂, H₃ zeigt. Der Zwischenspannungskreis Z entspricht dem in **Fig. 1** dargestellten Zwischenspannungskreis.

Die erste Dreilevelschaltung H₁ entspricht grundsätzlich der in Fig. 1 dargestellten Halbbrücke H. Die Transistoren T_{1A}, T_{1B}, und weiteren Transistoren T_{1C}, T_{1D} entsprechen den Transistoren T_{A}, T_{B}, und weiteren Transistoren T_{C}, T_{D} der Fig. 1. Für die Realisierung einer Dreilevelschaltung H₁ ist jeweils vorgesehen, dass der Mittelpunkt M₁, der Dreilevelschaltungen H₁ über zwei entgegengesetzt aneinander gereihte IGBT-Transistoren T_{1E}, T_{1F}, deren Emitter paarweise einander zugewandt sind, mit dem Mittenanschluss Z_{M} des Zwischenspannungskreises Z verbunden sind.

Darüber hinaus weist der vorliegende Umrichter für die beiden weiteren Phasen P₂, P₃ jeweils Dreilevelschaltungen H₂, H₃ auf, die jeweils ein Paar von in Serie geschalteten Transistoren T_{2A}, T_{2B}, T_{3A}, T_{3B}, die den Transistoren T_{A}, T_{B} aus Fig. 1 entsprechen, die aber keine weiteren dazu parallel geschalteten Transistoren aufweisen.

Für die Realisierung der beiden Dreilevelschaltungen H₂ H₃ ist jeweils vorgesehen, dass die jeweiligen Mittelpunkte M₂, M₃ der Dreilevelschaltungen H₂ H₃ über zwei entgegengesetzt aneinander gereihte IGBT-Transistoren T_{2E}, T_{2F}, T_{3E}, T_{3F}, deren Emitter paarweise einander zugewandt sind, mit dem Mittenanschluss Z_{M} des Zwischenkreises Z verbunden sind.

Der Mittelpunkt M₁ der ersten Dreilevelschaltung H₁ wird über eine erste Spule L₁ an die zweite Phase P₁ des Netzes geleitet. Der Mittelpunkt M₂ der zweiten Dreilevelschaltung H₂ wird über eine zweite Spule L₂ an die zweite Phase P₂ des Netzes geleitet. Ebenso wird der Mittelpunkt M₃ der dritten Dreilevelschaltung H₃ über eine dritte Spule L₃ an den dritten Phasenanschluss P₃ des Wechselspannungsnetzwerks geleitet. Schließlich wird der Mittenanschluss Z_{M}, der zwischen den beiden Zwischenkreiskondensatoren C_{Z1}, C_{Z2} liegt, an den Nullleiter N des Mehrphasennetzwerks angeschlossen. In der Verbindungsleitung zwischen dem Mittenanschluss der Zwischenkreisspannung U_{Z} und dem Nullleiter N des Mehrphasennetzes ist ein weiterer Transistorschalter T₄ vorgesehen, der dazu ausgebildet ist, die Verbindung zwischen dem Nullleiter N des Mehrphasennetzes und dem Mittenanschluss Z_{M} der Zwischenkreisschaltung Z zu unterbrechen oder herzustellen.

Entsprechend dem ersten Ausführungsbeispiel der Erfindung wird bei dem in **Fig. 2** dargestellten Umrichter der Strom i₁, i₂, i₃ durch jede einzelne Spule L₁, L₂, L₃ mittels eines Strommessgeräts A_{1,} A₂, A₃ gemessen und die Spannung u₁, u₂, u₃ zwischen jeder einzelnen Phase P₁, P₂, P₃ und dem Nullleiter N mittels eines Spannungsmessgeräts U₁, U₂, U₃ ermittelt.

Die Steuereinheit S des vorliegenden Umrichters ist dazu ausgebildet, sämtliche Transistoren T_{1A}, T_{1B}, T_{2A}, T_{2B}, T_{3A}, T_{3B} sämtliche weitere Transistoren T_{1C}, T_{1D} sowie die Schalttransistoren T_{1E}, T_{1F}, T_{2E}, T_{2F}, T_{3E}, T_{3F} und den Transistorschalter T₄ zu öffnen bzw. zu schließen. Ebenso sind die einzelnen Messwerte i₁, i₂, i₃, u₁, u₂, u₃ der Steuereinheit S zugeführt.

Im Normalbetrieb, d.h. sofern die zu übertragende Leistung oberhalb des Leistungsschwellenwerts liegt, sind die beiden weiteren Transistoren T_{1C}, T_{1D} offen und haben keinen Einfluss auf die weiteren Schaltvorgänge. Der Transistorschalter T₄ ist offen. Die Steuerschaltung S steuert die einzelnen T_{1A}, T_{1B}, T_{2A}, T_{2B}, T_{3A}, T_{3B} und Schalttransistoren T_{1E}, T_{1F}, T_{2E}, T_{2F}, T_{3E}, T_{3F} derart an, dass an den Mittelpunkten M₁, M₂, M₃ jeweils ein pulsweitenmoduliertes Signal entsteht, das in dieser Ausführungsform der Erfindung auf insgesamt drei unterschiedliche Spannungsniveaus zugreifen kann, nämlich auf den positiven und den negativen Anschluss der Zwischenkreisspannung sowie auf den Mittenanschluss der Zwischenkreisspannung.

Für den Fall, dass die zu übertragende Leistung unter dem vorgegebenen Leistungsschwellenwert z.B. 10% der maximal zu übertragenden Leistung fällt, werden sämtliche Schalttransistoren T_{1A}, T_{1B}, T_{2A}, T_{2B}, T_{3A}, T_{3B} der Dreilevelschaltungen H₁, H₂, H₃ deaktiviert. Wie im ersten Ausführungsbeispiel werden lediglich die beiden weiteren Transistoren angesteuert. Darüber hinaus werden auch die Schalttransistoren bzw. Mittelpunkttransistoren T_{1E}, T_{1F}, T_{2E}, T_{2F}, T_{3E}, T_{3F} deaktiviert bzw. nicht leitend geschaltet. Der Transistorschalter T₄ zwischen dem Mittenanschluss Z_{M} der Zwischenkreisschaltung Z und dem Nullleiter N wird geschlossen. In diesem Betriebszustand ist lediglich eine einzige Phase L₁ aktiv und weist gegenüber dem Nullleiter N einen vorgegebenen Wechselspannungsverlauf auf.

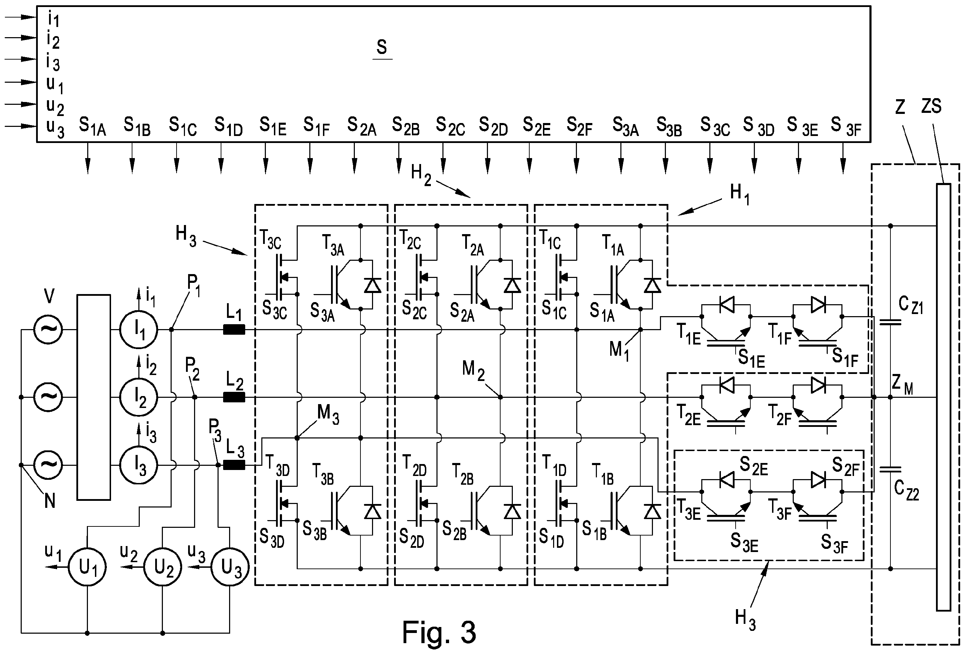

In **Fig. 3** ist eine zweite bevorzugte Ausführungsform der Erfindung näher dargestellt, die ein dreiphasiges Netzwerk mit drei Dreilevelschaltungen H₁, H₂, H₃ zeigt. Die Zwischenkreisstabilisationsschaltung Z entspricht der in **Fig.** 1 dargestellten Zwischenkreisstabilisierung.

Sämtliche hier dargestellten Dreilevelschaltungen H₁, H₂, H₃ entsprechen der in Fig. 2 dargestellten Dreilevelschaltung H₁. Die Transistoren T_{1A}, T_{1B}, T_{2A}, T_{2B}, T_{3A}, T_{3B}, und weiteren Transistoren T_{1C}, T_{1D} T_{2C}, T_{2D} T_{3C}, T_{3D} entsprechen den Transistoren T_{A}, T_{B}, und weiteren Transistoren T_{C}, T_{D} der Fig. 2.

Wie auch bei der zweiten Ausführungsform der Erfindung sind die einzelnen Mittelpunkte M₁, M₂, M₃ der Halbbrücken H₁, H₂, H₃ über zwei entgegengesetzt aneinander gereihte IGBT-Transistoren T_{1E}, T_{1F}, T_{2E}, T_{2F}, T_{3E}, T_{3F}, deren Emitter paarweise einander zugewandt sind, mit dem Mittenanschluss Z_{M} des Zwischenkreises Z verbunden.

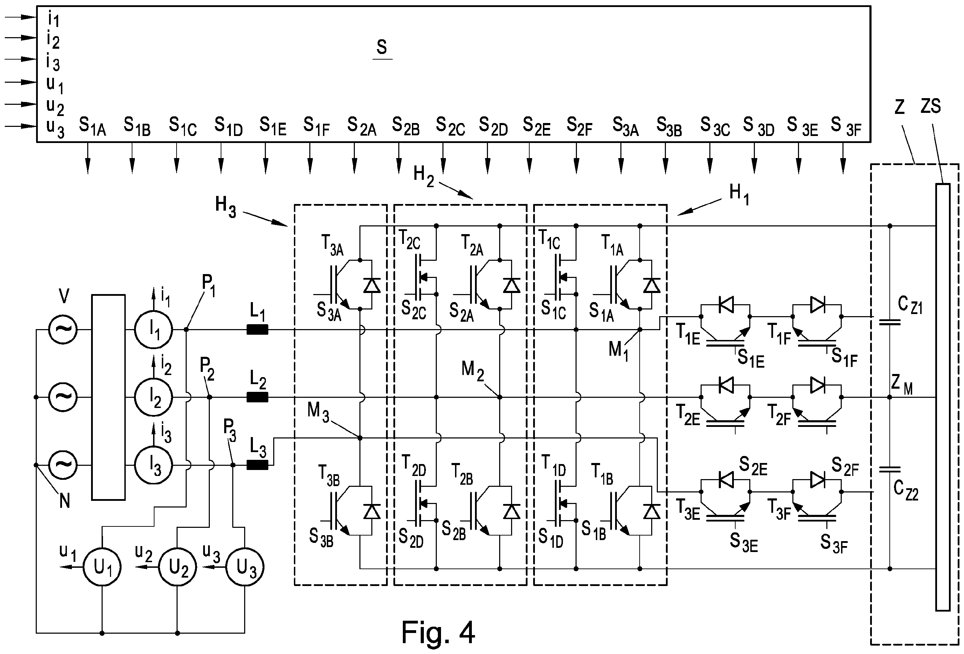

Wie auch im zweiten Ausführungsbeispiel der Erfindung werden die Mittelpunkte M₁ M₂ M₃ der Halbbrücken über Spulen L₁, L₂, L₃ an die jeweiligen Phasen P₁, P₂, P₃ des Netzes geleitet. Der in der zweiten Ausführungsform der Erfindung vorgesehene Transistorschalter T₄ kann bei der dritten Ausführungsform der Erfindung sowie bei der in Fig. 4 dargestellten vierten Ausführungsform der Erfindung entfallen.

Wie in **Fig. 2** dargestellt, werden die einzelnen durch die Spule L₁, L₂, L₃ fließenden Ströme i₁, i₂, i₃ mittels jeweils eines Strommessgeräts A_{1,} A₂, A₃ gemessen und die Spannungen u₁, u₂, u₃ zwischen jeder einzelnen Phase P₁, P₂, P₃ und dem Nullleiter N mittels eines Spannungsmessgeräts U₁, U₂, U₃ ermittelt.

Die Steuereinheit S des vorliegenden Umrichters ist dazu ausgebildet, sämtliche Transistoren T_{1A}, T_{1B}, T_{2A}, T_{2B}, T_{3A}, T_{3B} sämtliche weitere Transistoren T_{1C}, T_{1D} T_{2C}, T_{2D} T_{3C}, T_{3D} sowie die Schalttransistoren T_{1E}, T_{1F}, T_{2E}, T_{2F}, T_{3E}, T_{3F} zu öffnen bzw. zu schließen. Ebenso sind die einzelnen Messwerte i₁, i₂, i₃, u₁, u₂, u₃ der Steuereinheit S zugeführt.

Im Normalbetrieb, d.h. sofern die zu übertragende Leistung oberhalb des Spannungsschwellenwerts liegt, sind die weiteren Transistoren T_{1C}, T_{1D} T_{2C}, T_{2D} T_{3C}, T_{3D} aller Dreilevelschaltungen H₁, H₂, H₃ offen und haben keinen Einfluss auf die weiteren Schaltvorgänge. Die Steuerschaltung S steuert die einzelnen T_{1A}, T_{1B}, T_{2A}, T_{2B}, T_{3A}, T_{3B} und Schalttransistoren T_{1E}, T_{1F}, T_{2E}, T_{2F}, T_{3E}, T_{3F} derart an, dass an den Mittelpunkten M₁, M₂, M₃ jeweils ein pulsweitenmoduliertes Signal entsteht, das bei vorgegebener Glättung dem Sollwert-Signalverlauf entspricht.

Für den Fall, dass die zu übertragende Leistung unter den vorgegebenen Leistungsschwellenwert z.B. von 10% der maximal zu übertragenden Leistung fällt, werden sämtliche Schalttransistoren T_{1A}, T_{1B}, T_{2A}, T_{2B}, T_{3A}, T_{3B} der Dreilevelschaltungen H₁, H₂, H₃ deaktiviert. Anders als bei den vorangehenden Ausführungsbeispielen werden nun sämtliche Halbbrücken weiter betrieben, wobei jeweils die weiteren Transistoren T_{1C}, T_{1D} T_{2C}, T_{2D} T_{3C}, T_{3D} zur Erstellung eines pulsweitenmodulierten Spannungssignals im Mittelpunkt M₁, M₂, M₃ der jeweiligen Halbbrücke H₁, H₂, H₃ herangezogen werden.

In **Fig. 4** ist eine weitere Ausführungsform eines erfindungsgemäßen Umrichters dargestellt, bei dem im Gegensatz zu dem in **Fig. 3** dargestellten Umrichter nur zwei der drei Dreilevelschaltungen H₁, H₂ mit jeweils zwei Transistorpaaren T_{1A}, T_{1B}, T_{1C}, T_{1D}, T_{2A}, T_{2B}, T_{2C}, T_{2D} ausgestattet sind. Wie auch bei den anderen Ausführungsformen der Erfindung ist die Steuereinheit S dazu ausgebildet, bei Absinken der zu übertragenden Leistung auf unter 10% der Nennleistung, für die Umrichtung anstelle der Transistoren T_{1A}, T_{1B}, T_{2A}, T_{2B} die weiteren Transistoren T_{1C}, T_{1D}, T_{2C}, T_{2D} zu verwenden.

Zur Realisierung des in **Fig. 4** dargestellten Umrichters bei einer Nennleistung von 100 kW und einer Eingangsspannung von 230 Vᵣₘₛ können beispielsweise die folgenden Bauelemente gewählt werden: Als Spulen L₁, ... L₃ werden Drosseln mit einer Induktivität von 300 µH verwendet. Die Zwischenkreiskondensatoren C_{Z1}, C_{Z2} sind Elektrolyt-Kondensatoren und weisen jeweils eine Kapazität von 2 mF auf. Wird, wie im vorliegenden Beispiel, eine Zwischenkreisspannung U_{Z} von 800 V gewählt, weisen die beiden Zwischenkreiskondensatoren C_{Z1}, C_{Z2} eine Spannungsfestigkeit von jeweils mindestens 400 V auf.

Als Transistor wurden in der vorstehend genannten Konfiguration IGBT-Module verwendet, die bis 1200 V spannungsfest sind und die eine nominelle Strombelastung von 250 A aufweisen. Als weitere Transistoren wurden in der vorstehend genannten Konfiguration SiC-MOSFETS verwendet, die bis 1200 V spannungsfest sind und die eine nominelle Strombelastung von 40 Aₘₐₓ bzw 15 Aᵣₘₛ aufweisen. Der Grenzwert, unterhalb dem die Umrichtung mittels der weiteren Transistoren bzw SiC-MOSFETs erfolgt, liegt bei 5,5 kW, dh 5,5% der Nennleistung des Umrichters.

Zur Erreichung des Spannungsverlaufs wird mittels der Steuereinheit S ein PWM-Signal erstellt, das eine Schaltfrequenz von 5 kHz aufweist. Zur Erstellung des PWM-Signals können bei Verwendung einer Dreilevel-Schaltung, wie in den Fig. 2-4 dargestellt, jeweils die beiden Pole der Zwischenkreisspannung sowie der Mittenanschluss Z_{M} der Zwischenkreisspannung U_{Z} verwendet werden.

Bei der Erstellung des PWM-Signals kann durch entsprechende Wahl der verwendeten Spannungslevels zudem sichergestellt werden, dass die Spannungen an den Zwischenkreiskondensatoren C_{Z1}, C_{Z2} gleich sind. Eine solche Regelung ist beispielsweise in Choi et al, "Neutral-Point Voltage Balancing Method for Three-Level Inverter Systems with a Time-Offset Estimation Scheme", Journal of Power Electronics, Vol. 13, No. 2, March 2013 beschrieben.

Alternativ oder zusätzlich kann auch eine separate Zwischenkreisstabilisierungsschaltung ZS verwendet werden, die dafür sorgt, dass die beiden Spannungen an den Zwischenkreiskondensatoren gleich sind. Eine solche Zwischenkreisstabilisierungsschaltung ist beispielsweise in dem Referenzdokument "Aluminium Electrolytic Capacitors - General Technical Information" von TDK, abrufbar unter https://www.tdk-electronics.tdk.com/download/185386/5f33d2619fa73419e2a4af562122e90c/pdf-generaltechnicalinformation.pdf beschrieben.

Grundsätzlich besteht, abweichend von den in Fig. 2, 3 oder 4 dargestellten Ausführungsformen der Erfindung auch die Möglichkeit, zu den Schalttransistoren T_{1E}, T_{1F}, T_{2E}, T_{2F}, T_{3E}, T_{3F} jeweils weitere Schalttransistoren, beispielsweise MOSFETs parallel zu schalten, die lediglich dann zum Schalten verwendet werden, wenn die Sollspannung unter einem vorgegebenen Schwellenwert liegt.

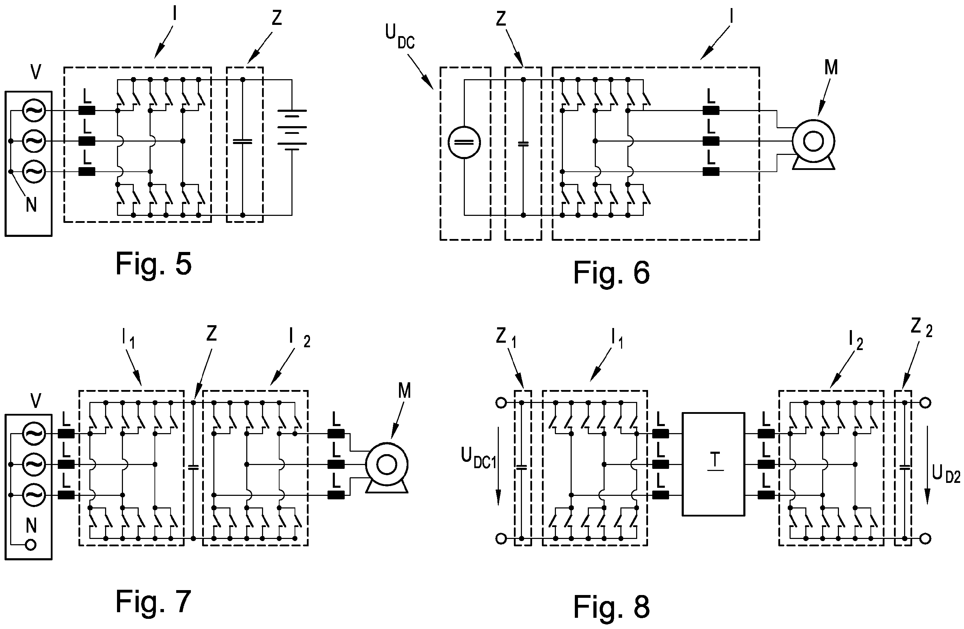

In den **Fig. 5 bis 8** werden unterschiedliche Applikationen eines Umrichters dargestellt.

In **Fig. 5** ist eine erste Anwendung eines Umrichters dargestellt, be der ein Gleichspannungsverbraucher am Wechselspannungsnetz angeschlossen ist. Die Steuereinheit S passt ihre Schaltvorgänge dabei an die vom Netz vorgegebene Spannung an. Der Gleichspannungsverbraucher ist dabei an die Zwischenkreisspannung U_{Z} angeschlossen. Mit der in **Fig. 5** dargestellten Schaltungstopologie kann anstelle eines Gleichspannungsverbrauchers auch ein Gleichspannungsgenerator oder ein Gleichspannungs-Energiespeicher angeschlossen werden.

In **Fig. 6** ist eine zweite Anwendung eines Umrichters näher dargestellt, bei der ein Wechselspannungsverbraucher am Gleichspannungsnetz angeschlossen ist. Die Steuereinheit S besitzt auch einen eigenen Taktgeber zur Erstellung der Netzfrequenz. Die Gleichspannungsversorgung ist dabei an den Spannungszwischenkreis angeschlossen.

Eine weitere Anwendung ist in **Fig. 7** dargestellt und betrifft einen AC/AC-Wandler. Dieser umfasst jeweils zwei erfindungsgemäße Umrichter, mit gemeinsamen Zwischenkreiskondensatoren, wobei die jeweiligen Netz-Wechselspannungsanschlüsse die beiden Anschlüsse des AC/AC-Wandlers bilden. Beispielsweise kann mit einer solchen Anwendung ein Wechselspannungsmotor mit einer vorgegebenen und von der Frequenz abhängigen Drehzahl betrieben werden, wenn am Netz eine Spannung mit einer vorgegebenen und nicht veränderlichen Frequenz anliegt.

Schließlich können zwei Umrichter, wie in **Fig. 8** dargestellt auch einen entkoppelten DC/DC-Wandler bilden. In diesem Fall sind die Wechselspannungsanschlüsse der beiden Umrichter U1, U2 jeweils an einen Transformator angeschlossen. Die Anschlüsse der Zwischenkreiskondensatoren, an denen die Zwischenkreisspannung anliegt, bilden die Anschlüsse des DC/DC-Wandlers. Für den Fall, dass die zu übertragende Sollleistung unter dem vorgegebenen Schwellenwert liegt, kann zusätzlich die Schaltfrequenz der Steuereinheit S erhöht werden. Dadurch wird der Rippel verringert und abhängig von der Verlustkurve der weiteren Transistoren die Effizienz erhöht werden.

## Patentansprüche

1. Umrichter für ein mehrphasiges Wechselstromnetz mit einer Anzahl von Transistor-Halbbrücken oder Multilevel-Schaltungen (H₁, H₂, H₃), die mit ihren Enden oder Anschlüssen jeweils an einer Zwischenkreisspannung einer Zwischenkreisstabilisationsschaltung (Z) anliegen und deren Mittelpunkt oder Ausgang an die jeweilige Phase angeschlossen ist,
- wobei der Umrichter eine Steuereinheit aufweist, die die einzelnen Transistoren der Transistor-Halbbrücken oder Multilevel-Schaltungen (H₁, H₂, H₃) nach vorgegebenen Kriterien, insbesondere aufgrund gemessener Ströme und Spannungen, ansteuert, sodass sich im Mittelpunkt der jeweiligen Halbbrücke oder am Ausgang der jeweiligen Multilevel-Schaltung (H₁, H₂, H₃) ein Spannungsverlauf ergibt, der an einen Wechselspannungsverlauf angenähert ist, und
- wobei für jeden der Transistoren zumindest einer der Halbbrücken oder zumindest einer der Multilevel-Schaltungen (H₁, H₂, H₃) jeweils ein weiterer Transistor vorgesehen ist, der jeweils parallel zu diesem Transistor geschaltet ist, wobei der weitere Transistor für eine nominelle Strombelastung ausgelegt ist, die unterhalb der nominellen Strombelastung des Transistors, insbesondere unterhalb von 20% der nominellen Strombelastung des Transistors, liegt, und
wobei
- eine Strom- oder Leistungsmesseinrichtung zur Messung des oder der vom Umrichter übertragenen Strom oder Leistung vorgesehen ist, die der Steuereinheit vorgeschaltet ist und dazu ausgebildet ist, der Steuereinheit einen Strom- oder Leistungsmesswert zuzuführen,
- wobei die Steuereinheit dazu ausgebildet ist, für den Fall, dass die vom Umrichter zu übertragene Sollleistung oder der durch den Umrichter fließende Strom einen vorgegebenen Schwellenwert unterschreitet, die weiteren Transistoren anstelle der zu ihnen parallel geschalteten Transistoren anzusteuern,
**dadurch gekennzeichnet,**
- **dass** die Multilevel-Schaltungen als Dreilevelschaltungen ausgeführt sind,
- **dass** der Zwischenspannungskreis (Z) einen Mittenanschluss (ZM) aufweist,
- **dass** die Mittelpunkte (M1, M2, M3) der Dreilevelschaltungen (H1, H2, H3) jeweils über zwei entgegengesetzt aneinander gereihte IGBT-Transistoren (T1E, T1F; T2E, T2F; T3E, T3F), deren Emitter paarweise einander zugewandt sind, mit dem Mittenanschluss (ZM) des Zwischenspannungskreises (Z) verbunden sind und
- **dass** die Steuereinheit (S) dazu ausgebildet ist, für den Fall, dass die vom Umrichter zu übertragene Sollleistung oder der durch den Umrichter fließende Strom einen vorgegebenen Schwellenwert unterschreitet, die IGBT-Transistoren (T1E, T1F, T2E, T2F, T3E, T3F) zu deaktivieren und nicht leitend zu schalten, andernfalls die IGBT-Transistoren (T1E, T1F, T2E, T2F, T3E, T3F) derart anzusteuern, dass an den Mittelpunkten (M1, M2, M3) jeweils ein pulsweitenmoduliertes Signal entsteht, das auch auf den Mittenanschluss der Zwischenkreisspannung zugreift.

2. Umrichter nach Anspruch 1 zum Anschluss an ein mehrphasiges Netz, wobei für jeden der Transistoren in allen Halbbrücken oder Multilevel-Schaltungen jeweils ein weiterer Transistor vorgesehen ist, der jeweils parallel zu diesem Transistor geschaltet ist, wobei der weitere Transistor für eine nominelle Strombelastung ausgelegt ist, die unterhalb der nominellen Strombelastung des jeweiligen Transistors, insbesondere unterhalb von 20% der nominellen Strombelastung des Transistors, liegt.

## Claims

1. Inverter for a multi-phase AC network with a number of transistor half-bridges or multi-level circuits (H₁, H₂, H₃), the ends or connections of which are each connected to an intermediate circuit voltage of an intermediate circuit stabilisation circuit (Z) and the centre point or output of which is connected to the respective phase,
- wherein the inverter has a control unit which controls the individual transistors of the transistor half-bridges or multi-level circuits (H₁, H₂, H₃) according to predetermined criteria, in particular based on measured currents and voltages, so that at the centre of the respective half-bridge or at the output of the respective multi-level circuit (H₁, H₂, H₃) a voltage curve is produced that is approximated to an AC voltage curve, and
- wherein for each of the transistors of at least one of the half-bridges or of at least one of the multi-level circuits (H₁, H₂, H₃) an additional transistor is provided in each case, which is connected in parallel with this transistor in each case, wherein the additional transistor is designed for a nominal current load which is below the nominal current load of the transistor, in particular below 20% of the nominal current load of the transistor, and wherein
- a current or power measuring device is provided for measuring the current or power transmitted by the inverter, which is connected upstream of the control unit and is configured to supply the control unit with a measured current or power value,
- wherein the control unit is configured to control the additional transistors instead of the transistors connected in parallel with them, in the event that the target power to be transmitted by the inverter or the current flowing through the inverter falls below a predetermined threshold value,
**characterised in that**
- the multi-level circuits are formed as three-level circuits,
- the intermediate voltage circuit (Z) has a centre connection (ZM),
- the centre points (M1, M2, M3) of the three-level circuits (H1, H2, H3) are each connected to the centre connection (ZM) of the intermediate voltage circuit (Z) via two IGBT transistors (T1E, T1F; T2E, T2F; T3E, T3F) which are arranged in opposing rows and whose emitters face each other in pairs, and
- the control unit (S) is configured to deactivate the IGBT transistors (T1E, T1F, T2E, T2F, T3E, T3F) and switch them to a non-conductive state in the event that the target power to be transmitted by the inverter or the current flowing through the inverter falls below a predetermined threshold value,
otherwise, the IGBT transistors (T1E, T1F, T2E, T2F, T3E, T3F) are controlled in such a way that a pulse-width modulated signal is generated at the centre points (M1, M2, M3), which also accesses the centre connection of the intermediate voltage circuit.

2. Inverter according to claim 1 for connection to a multi-phase network, wherein for each of the transistors in all half-bridges or multi-level circuits an additional transistor is provided in each case, which is connected in parallel to this transistor in each case, wherein the additional transistor is designed for a nominal current load which is below the nominal current load of the respective transistor, in particular below 20% of the nominal current load of the transistor.

## Revendications

1. Onduleur pour un réseau de courant alternatif polyphasé avec un certain nombre de demi-ponts à transistors ou de circuits multiniveaux (H₁, H₂, H₃), dont les extrémités ou connexions se trouvent respectivement sous une tension de circuit intermédiaire d'un circuit de stabilisation de circuit intermédiaire (Z) et dont le point central ou la sortie est raccordé à la phase respective,
- dans lequel l'onduleur présente un dispositif de commande qui commande les différents transistors des demi-ponts à transistors ou des circuits multiniveaux (H₁, H₂, H₃) selon des critères prédéfinis, en particulier sur la base de courants et de tensions mesurés, de sorte qu'il en résulte au point central du demi-pont respectif ou à la sortie du circuit multiniveau respectif (H₁, H₂, H₃) une courbe de tension qui se rapproche d'une courbe de tension alternative, et
- dans lequel, pour chacun des transistors d'au moins un des demi-ponts ou d'au moins un des circuits multiniveaux (H₁, H₂, H₃), respectivement un transistor supplémentaire qui est monté respectivement en parallèle avec ce transistor est prévu, dans lequel le transistor supplémentaire est conçu pour une charge de courant nominale qui est inférieure à la charge de courant nominale du transistor, en particulier inférieure à 20 % de la charge de courant nominale du transistor, et dans lequel
- un dispositif de mesure de courant ou de puissance est prévu pour mesurer le courant ou la puissance transmis par l'onduleur, dispositif qui est monté en amont du dispositif de commande et qui est conçu pour fournir une valeur de mesure de courant ou de puissance au dispositif de commande,
- dans lequel le dispositif de commande est conçu pour, dans le cas où la puissance de consigne à transmettre par l'onduleur ou le courant circulant à travers l'onduleur est inférieur à une valeur seuil prédéterminée, commander les transistors supplémentaires à la place des transistors montés en parallèle avec eux,
**caractérisé en ce que**
- les circuits multiniveaux sont réalisés sous forme de circuits à trois niveaux,
- le circuit de tension intermédiaire (Z) présente un raccordement central (ZM),
- les points centraux (M1, M2, M3) des circuits à trois niveaux (H1, H2, H3) sont respectivement connectés au raccordement central (ZM) du circuit de tension intermédiaire (Z) par l'intermédiaire de deux transistors IGBT (T1E, T1F ; T2E, T2F ; T3E, T3F) alignés en sens inverse, dont les émetteurs sont tournés l'un vers l'autre par paires, et
- le dispositif de commande (S) est conçu pour, dans le cas où la puissance de consigne à transmettre par l'onduleur ou le courant circulant à travers l'onduleur est inférieur à une valeur seuil prédéterminée, désactiver et rendre non conducteurs les transistors IGBT(T1E, T1F, T2E, T2F, T3E, T3F),
sinon, commander les transistors IGBT (T1E, T1F, T2E, T2F, T3E, T3F) de sorte que respectivement un signal modulé en largeur d'impulsions qui accède également au raccordement central de la tension de circuit intermédiaire est généré aux points centraux (M1, M2, M3).

2. Onduleur selon la revendication 1 pour le raccordement à un réseau polyphasé, dans lequel, pour chacun des transistors dans tous les demi-ponts ou circuits multiniveaux, respectivement un transistor supplémentaire qui est monté respectivement en parallèle avec ce transistor est prévu, dans lequel le transistor supplémentaire est conçu pour une charge de courant nominale qui est inférieure à la charge de courant nominale du transistor respectif, en particulier inférieure à 20 % de la charge de courant nominale du transistor.
